# EUROPEAN PATENT APPLICATION

(11) **EP 2 477 434 A1**
(43) Date of publication of application: **18.07.2012**
(21) Application number: 11305045.4
(22) Date of filing: 17.01.2011
(51) Int. Cl.: H04W 24/02, H04W 24/10

(54) **Method of selection of neighbour cells, mobile station and computer program to carry out the method**

(71) Applicant: Alcatel Lucent, 75007 Paris (FR)
(72) Inventor: Womg, Shin Horng, Chippenham, SN14 0SP (GB); Baker, Matthew, Canterbury, Kent CT2 9DB (GB)
(74) Representative: Lück, Stephan

(57) **Abstract**

A method, in a cellular radio-communication system comprising a core network and an access network, the access network comprising base stations for providing wireless links to at least one mobile station, is proposed. Radio measurements on neighboring cells are performed in order to create at least one measurement item that contains information related to a measured neighboring cell. A measurement item is randomly selected in a first set of measurement items comprising the created at least one measurement item and a second set of previously created measurement items, the second set containing at least one measurement item;. A selected measurement item is deleted from the first set, and the second set is updated by replacing the selected measurement item deleted in the second set with the corresponding number of created measurement items.

## Description

### BACKGROUND OF THE INVENTION

The present invention relates to the field of wireless cellular communication networks, and more particularly to a method for selecting neighbour cells in a mobile station of a wireless cellular communication network.

The term "wireless cellular communication network" as used herein refers to any type of radio (or wireless) cellular network, in particular, GSM ("Global System for Mobile communications"), UMTS ("Universal Mobile Telecommunication System"), CDMA, CDMA 2000 (3GPP2), FDD ("Frequency Division Duplex"), TDD ("Time Division Duplex"), WiMAX, evolved-UTRAN (also known as LTE ("Long-Term Evolution")).

Furthermore, the term "mobile station" as used herein refers to any type of fixed or mobile (or portable) communication terminal (such as, for example, portable, pocket, hand-held, computer-included, or car-mounted mobile devices) capable of exchanging data with a radio-communication network on a radio communication link. Consequently, it may be, among other things, a telephone (also referred to as "cellular phone") or desktop computer connected to a local router or server and equipped with a radio communication interface; a mobile telephone; a laptop computer or personal digital assistant (or PDA) equipped with a radio communication interface; a server or local router equipped with a radio communication interface; a high-frequency radio receiver; or a terrestrial or satellite television receiver. In a UMTS or LTE system, the mobile station is referred to as "User Equipment" (UE).

In a typical cellular wireless communication system, mobile station (also known as user equipment (UEs) in UMTS and LTE systems) communicate via a radio access network (RAN) with one or more core networks. The radio access network provides radio coverage spanning a geographical area which is divided into cell areas, with each cell area being served by a radio access node, such as a base station. A cell is a geographical area where radio coverage is provided by a base station equipment at a base station site. The radio access nodes and mobile stations are adapted for communicating over the air interface when a mobile station is within radio coverage of a cell served by a radio access node or base station site.

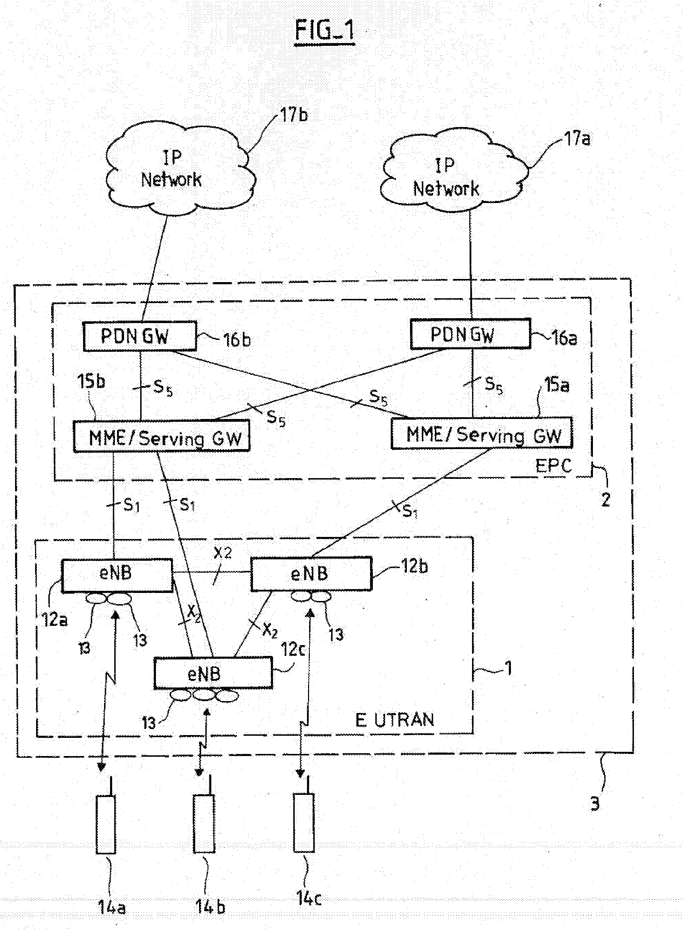

An example of wireless cellular communication system is the LTE (Long Term Evolution) system specified by the 3GPP. Figure 1 shows the architecture of a LTE wireless communication system. Shown on Fig. 1 is a core network 2, called "Evolved Packet Core" (EPC), which is linked on the one hand to one or more packet data networks (e.g. IP networks) 17a, 17b and on the other hand, by means of a logical interface referred to as the S1 interface, to a radio access network 1 called E-UTRAN (Evolved Universal Terrestrial Radio Access Network). A single node, called eNode-B (or eNB) has been specified as the network element of an E-UTRAN. The eNB provides the functions that are typically provided by a base station in a radio access network. The eNBs 12a-12c are distributed over the territory covered by the E-UTRAN, and are each capable of communicating by radio (on the air interface) with mobile terminals 14a, 14b, 14c called UE ("User Equipment"), through respective radio coverage areas also referred to as cells 13. The logical interface between eNBs 12a - 12c and UEs 14a, 14b, 14c is referred to as the Uu interface. The eNBs 12a-12c are interconnected to form a mesh-type network, and communicate with each other by means of a logical interface referred to as the X2 interface. One may consider schematically that the features of the UMTS radio access network Node-B and RNC nodes have been embedded in a single E-UTRAN node which is the eNB.

The Evolved UTRAN comprises elements of layers 1 and 2 of the ISO model, such as a physical layer for layer 1, and a medium access control (MAC) layer, a radio link control (RLC) layer, and a packet data convergence protocol (PDCP) layer for layer 2, with a view to providing the links required on the radio interface Uu. The E-UTRAN also comprises a stage for controlling the radio resources (RRC, "Radio Resource Control") belonging to layer 3, as is described in the 3GPP TS 36.331 technical specification "Evolved Universal Terrestrial Radio Access (E-UTRA) Radio Resource Control (RRC); protocol specification (Release 8)", version 8.4.0, published in December 2008 by the 3GPP.

The core network EPC is connected to external packet data networks through packet data network gateways (PDN GWs) 16a, 16b. The PDN GWs performs packet routing between the EPC and external PDNs 17a, 17b, policy enforcement, charging support, and IP address allocation for UEs 14a-14c. The S1 logical interface connects the E-UTRAN to the EPC via two logical nodes, the Serving Gateway (S-GW) and the Mobility Management Entity (MME).

In a cellular wireless communication network deployment, for each cell, the operator needs to identify which other cells can be its neighbour cells. In LTE networks the identified neighbour cells are stored in a list , called the Neighbour Cell List (NCL), which is used for cell reselection and handover purposes. It is not uncommon that cells that could be neighbours are not identified as neighbour cells and a missing neighbour can cause call drop or unnecessary interference. According to the so-called "Automatic Neighbour Relations" (ANR) procedure specified by 3GPP, mobile station devices may be used to detect missing neighbours and to report these missing neighbours to the network. This avoids relying entirely on a provisioning procedure for defining the neighbour cells of each cell in the radio access network. The network will identify which of these detected neighbours can potentially be a neighbour cell. The ANR procedure provides that the network selects a few (ANR enabled) mobile stations (MS) and instructs them to perform ANR operations. The MS performs detections and measurements of missing neighbour cells when they (MS) are not active (e.g. in Idle Mode or Cell/URA PCH State). The MS typically includes memory means (such as a memory bank on a chipset) which are used to store these measurements (of missing neighbour cells) and reports them when it moves to an active state (e.g. Cell DCH).

However, the number of measurements that can be reported to the network when the MS returns to the active state may be limited in practice, either because the number of measurements the device can store is limited, or because it is desired to limit the amount of signalling from the device to the network, in particular to avoid overload.

If the MS is inactive for a long time, or in certain network topologies, it may encounter many different neighbour cells and therefore gather a lot of measurements, even though its storage capacity and/or the amount of signalling carrying information regarding the neighbour cells is limited.

According to one aspect, the invention proposes a method, in a cellular radio-communication system comprising a core network and an access network, the access network comprising base stations for providing wireless links to at least one mobile station. The method comprises: performing radio measurements on neighboring cells in order to create at least one measurement item that contains information related to a measured neighboring cell, randomly selecting at least one measurement item in a first set of measurement items comprising the created at least one measurement item and a second set of previously created measurement items, the second set containing at least one measurement item, deleting at least one selected measurement item from the first set, and updating the second set by replacing the at least one selected measurement item deleted in the second set with the corresponding number of the created at least one measurement item.

The method may also comprise the transmission of a report message comprising the updated set of measurement items.

Another broad aspect provides a method, in a cellular radio-communication system comprising a core network and an access network, the access network comprising base stations for providing wireless links to at least one mobile station, which comprises: detecting through radio measurements neighbor cells of a cell, storing at least some of the identified neighbour cells. If the number of stored identified neighbour cells is greater than a predetermined number, randomly selecting a number of stored identified neighbour cells equal to such predetermined number, and reporting information related to at least some of the selected stored identified neighbor cells to the access network.

Yet another broad aspect provides a mobile station, in a cellular radio-communication system comprising a core network and an access network, the access network comprising base stations for providing wireless links to at least one mobile station. The mobile station comprises a radio module adapted for performing radio measurements on neighboring cells in order to create at least one measurement item that contains information related to a measured neighboring cell, storage means adapted for storing previously created measurement items, and a processor adapted for randomly selecting at least one measurement item in a first set of measurement items comprising the created at least one measurement item and a second set of previously created measurement items, the second set containing at least one measurement item. The processor is further adapted for deleting at least one selected measurement item from the first set, and updating the second set by replacing the at least one selected measurement item deleted in the second set with the corresponding number of the created at least one measurement item.

The radio module of the mobile station may be further adapted for transmitting a report message comprising the updated set of measurement items.

The methods proposed herein may advantageously be embodied in a Long Term Evolution (LTE) wireless communication system, the mobile station being a LTE capable User Equipment.

Another broad aspect provides a computer readable medium having processor executable instructions thereon for implementation by a processor, the instructions executing the above-mentioned methods.

Other features and advantages of the invention will become apparent from the following description of non-limiting exemplary embodiments, with reference to the appended drawings, in which:
FIG. 1 is a diagram of a LTE wireless communication system to which the invention may be applied;
FIG. 2 is a diagram of a LTE radio access network to which the invention may be applied;
FIG. 3 is a chart of cells detected in an exemplary embodiment of the invention;
FIG. 4 is a chart showing random number from a uniform distribution drawn according to an exemplary embodiment of the invention;
FIG. 5 is diagram illustrating a scenario with overshooters and ANR UE in a valley to which the invention may be applied.

### DESCRIPTION OF PREFERRED EMBODIMENTS

In the present description, the invention will be described more particularly in its application, non limiting, to cellular wireless communication systems of the LTE type ("Long Term Evolution"). In this system, the invention finds application within the framework of the ANR procedure specified by the 3GPP (3^{rd} Generation Partnership Project).

Fig. 1 shows a mobile cellular digital telecommunication network 100. The telecommunications network 100 has a number of base stations of which the base stations (eNBs) 1, 2 and 3 are shown in fig. 1 by way of example. The eNBs 1, 2 and 3 supports the ANR function. The UEs shown in Figures 1, 2 and 5 are also assumed to support the ANR function.

On Fig. 1 the user equipment 14b is located within a cell 13 that is serviced by the base station 12c. The base station 12c may instruct the user equipment 14b to perform measurements on neighbor cells, which measurements will result in measurement items generated at the user equipment 14b. This way the user equipment 14b detects the base station 12b but not the base station 12a which is a little more remote but still in the neighborhood of base station 12c. The user equipment 14b generates from the list of created measurement items a list of measurement reports, each report corresponding to an item which is to be reported to the radio access network. The UE 14b transmits to the radio access network a message containing measurement reports which include, inter alia, information regarding the base station 12b. This message may contain the cell identifier of the base station 12b and identify the base station 12b as neighbour to the base station 12c.

A limit to the size of the list of measurement reports may be predefined, either by configuration of the UEs or via signalling from the radio access network. This predefined limit may reflect a limitation in the memory capacity of certain UEs and/or be set in order to limit the amount of signalling on the air interface related to the ANR procedure.

A random rejection criterion is used to prevent storage and/or reporting of measurements of detected cells when such predefined limit is reached.

Until the limit is reached, the MS will store and report measurements of all the detected neighbour cells. Once the limit is reached, the MS will, each time a new neighbour cell that is not currently listed in the device is detected and measured, randomly select one cell to delete its measurement(s) from storage or from the list of reported measurements, in order to add the measurement(s) of the newly detected neighbour cell to the list.

This recognizes that the network can instruct several MSs to provide measurements for ANR operations, and by randomising the detected cells to store (and report), the collection of all detected cells will be likely to give the network a larger view of the neighbour relations.

In an embodiment, the random rejection is based on a uniform distribution. That is, each detected cell (including the newly detected cell) has the same probability of being rejected.

In a second embodiment, a weight is applied to the rejection probability. This weight can be based on the measured signal quality, frequency, PLMN (Public Land Mobile Network) or RAT (Radio Access Technology) of the detected cell. For example, neighbour cells with weak but acceptable signal quality may have a lower chance of being detected and less likely to be reported. Hence a lower weight is applied to its rejection probability so that it has a higher chance of being stored in the MS that managed to detect it.

In a third embodiment, the network can apply different weighting criteria to different groups of MS. For example, the network may instruct 50% of the selected MSs to favor cells that have good signal quality (i.e. cells that have good signal quality has higher chance of being stored) and for the remaining 50% of the MSs to favor cells that have poor signal quality (i.e. cells that have poor signal quality has a higher chance of being stored). This is useful if the number of MS used for ANR is small and a uniform distribution criteria (as in the first embodiment) may not give a large view of the neighbour relations.

In a fourth embodiment, each newly detected cell is assigned a restricted probability of being included even if the limit is not reached. This gives a means to reduce the amount of reporting by adjusting the probability of accepting a detected cell.

In some variations of any of the above embodiments, only detected cells that have a signal quality above a predetermined threshold are allowed to be considered. Cells with signal quality below a threshold are rejected. This recognizes that cells with very poor signal quality are unlikely to be useful as potential neighbors.

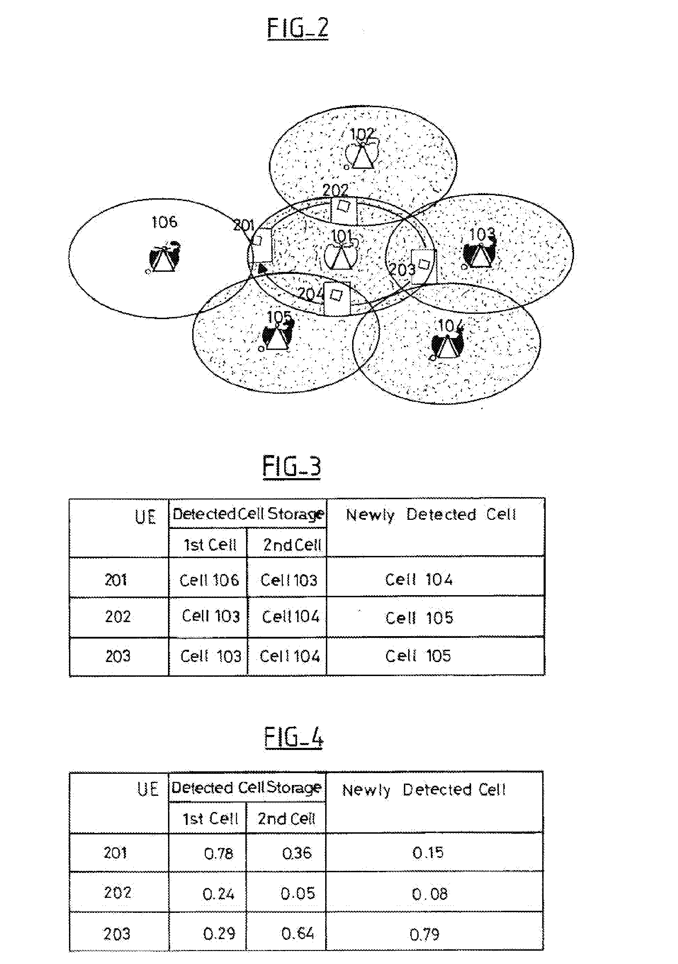

An example deployment is shown in Figure 2 where the cell of interest is Cell 101. Cell 102 in Figure 2 is a known neighbour cell of Cell 101 and Cell 103, 104, 105 and 106 are missing neighbour cells (i.e. not included in the Neighbour Cell List of Cell 101). Three UEs, namely UE 201, UE 202 & UE203, are instructed to perform an ANR procedure and they start at different locations as shown in Figure 2. For simplicity and purpose of example, the UEs shown on Figure 2 circle around Cell 101 as shown in the arrow in Figure 2 (note: UE can take any path). In this example we assume that each UE can only store 2 cells worth of measurement items (in this example measurement items contain information obtained from the measurements carried out on neighbour cells and are to be reported to the network, hence are also referred to as measurement reports). This may be due to a memory limitation in the UEs 201 - 204 or due to the fact that the network has previously indicated that a maximum of 2 cells worth of measurement reports shall be reported.

At a certain time the limit of two measurement reports is reached for the cells shown in the table on Figure 3, and the UEs 201 - 204 detect another new cell. It should be noted that in some embodiments the limit may be set at a different level for different UEs.

At this point the UEs 201 - 204 need to discard a detected cell. Each UE 201 - 204 draws a random number from a uniform distribution for each detected cell. Assume the random number is as shown in the table on Figure 4.

Each UE 201 - 204 then rejects the cell that has the smallest number. Here, UE 201 rejects Cell 104 (newly detected cell), UE 202 rejects Cell 104 (2^{nd} cell in storage) and UE 203 rejects Cell 103 (1^{st} cell in storage). The resultant cells in the storage are shown in Figure 4. These are reported to the network giving the network all the missing neighbour cells. It should be noted that choosing the smallest number is just one of several ways to implement an equal rejection probability.

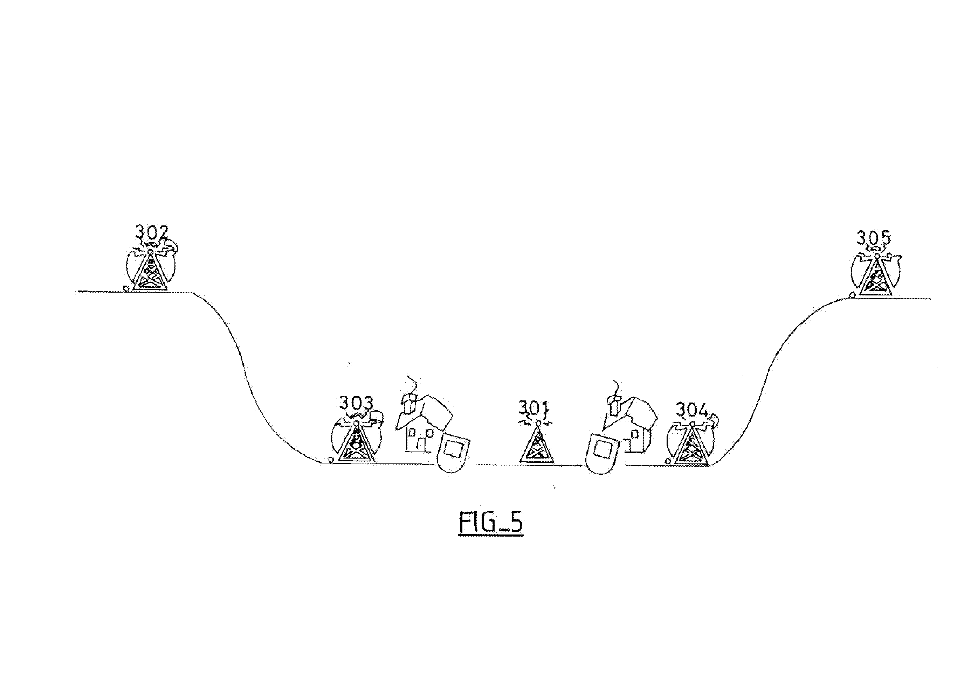

In the example shown in Figure 5, as described above in relation to the prior art, a deterministic approach will repeatedly report Cells 302 and 305 as detected neighbours for Cell 301 and miss out Cells 303 and 304. In contrast the proposed solution using the random approach will result in some UEs rejecting one or both the over-shooters and reporting one or both of Cells 303 and 304 to the network.

The methods described herein may be implemented for example in a mobile station device which comprises a radio module and a control module connected to each other. The control module includes a processor and storage means wherein measurement items are stored in a list. The radio module is adapted for, upon receiving instructions from the control module, performing radio measurements on cells managed by base stations from which radio signals are received. Those include cells that are neighbour to the one in which the mobile station device is communicating with the radio access network infrastructure of the cellular radiocommunication system through radio links. The radio measurements on neighbour cells may be performed according to the Automatic Neighbour Relations procedure, in particular in cases where the mobile station device operated in compliance with the LTE standard. The radio measurements on neighbouring cells result in one or more measurement items. The processor is adapted for processing a first set of measurement items which comprises the stored previously created measurement items (which form a second set of measurement items) as well as the newly created measurement items. The processor is also adapted for executing an algorithm that randomly selects at least one measurement item in the first set of measurement items in order to match a predefined limit of size for the stored list of measurement items or a predefined limit of size of the list of measurement items that will be reported to the radio access network. One or several of the selected items are deleted from the first set. The newly created measurement item(s) may be deleted in this process. The processor is also adapted for updating the list of measurement items stored in the memory means by replacing items which were selected for deletion in the second set of measurement items with newly created measurement items which were not selected for deletion.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks referred to or labeled as "processor", "controller" or "control module", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "control module" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method, in a cellular radio-communication system comprising a core network and an access network, the access network comprising base stations for providing wireless links to at least one mobile station, comprising:
- performing radio measurements on neighboring cells in order to create at least one measurement item that contains information related to a measured neighboring cell;
- randomly selecting at least one measurement item in a first set of measurement items comprising the created at least one measurement item and a second set of previously created measurement items, the second set containing at least one measurement item;
- deleting at least one selected measurement item from the first set;
- updating the second set by replacing the at least one selected measurement item deleted in the second set with the corresponding number of the created at least one measurement item.

2. The method according to claim 1, further comprising transmitting a report message comprising the updated set of measurement items.

3. A method, in a cellular radio-communication system comprising a core network and an access network, the access network comprising base stations for providing wireless links to at least one mobile station, comprising:
- detecting through radio measurements neighbor cells of a cell;
- storing at least some of the identified neighbour cells;
- if the number of stored identified neighbour cells is greater than a predetermined number, randomly selecting a number of stored identified neighbour cells equal to such predetermined number;
- reporting information related to at least some of the selected stored identified neighbor cells to the access network.

4. A mobile station, in a cellular radio-communication system comprising a core network and an access network, the access network comprising base stations for providing wireless links to at least one mobile station, comprising:
- a radio module adapted for performing radio measurements on neighboring cells in order to create at least one measurement item that contains information related to a measured neighboring cell;
- storage means adapted for storing previously created measurement items;
- a processor adapted for randomly selecting at least one measurement item in a first set of measurement items comprising the created at least one measurement item and a second set of previously created measurement items, the second set containing at least one measurement item;
- the processor being further adapted for deleting at least one selected measurement item from the first set, and updating the second set by replacing the at least one selected measurement item deleted in the second set with the corresponding number of the created at least one measurement item.

5. The mobile station according to claim 4, wherein the radio module is further adapted for transmitting a report message comprising the updated set of measurement items.

6. A computer readable medium having processor executable instructions thereon for implementation by a processor, the instructions executing a method according to claims 1 to 3.
